# EUROPÄISCHE PATENTSCHRIFT

(11) **EP 2 571 732 B1**
(45) Veröffentlichungstag und Bekanntmachung des Hinweises auf die Patenterteilung: **10.08.2016**
(21) Anmeldenummer: 11715514.3
(22) Anmeldetag: 18.04.2011
(51) Int. Cl.: B60S 1/38

(54) **WISCHBLATT FÜR EINEN SCHEIBENWISCHER**
WIPER BLADE FOR A WINDSHIELD WIPER
BALAI D'ESSUIE-GLACE POUR UN ESSUIE-GLACE

(30) Priorität: 19.05.2010 DE 102010029107
(43) Veröffentlichungstag der Anmeldung: 27.03.2013
(73) Patentinhaber: Robert Bosch GmbH, 70442 Stuttgart (DE)
(72) Erfinder: CAMPS, Johan, B-3380 Glabbeek (BE); VAN HOYE, Jan, B-3980 Tessenderlo (BE); HUEHSAM, Andreas, B-3001 Heverlee (BE); WEIDLICH, Jochen, 76437 Rastatt (DE)
(86) Internationale Anmeldenummer: PCT/EP2011/056089
(87) Internationale Veröffentlichungsnummer: WO 2011/144400

(56) Entgegenhaltungen:
- EP-B1- 1 053 144
- WO-A2-2008/036894
- DE-U1- 20 220 355

## Beschreibung

### Stand der Technik

Die vorliegende Erfindung betrifft ein Wischblatt für einen Scheibenwischer, mit einer Wischleiste, die mindestens eine Tragschiene aufweist, an die eine aus Kunststoff ausgebildete Basisanschlussvorrichtung angeformt ist, die an einer Adaptereinheit zur Anlenkung der Wischleiste an einem Wischerarm befestigt ist.

Die EP 1 053 144 B1 beschreibt ein derartiges Wischblatt, bei dem eine aus Kunststoff ausgebildete Basisanschlussvorrichtung an eine metallische Tragschiene angeformt wird. Hierbei wird die metallische Tragschiene in eine zugeordnete Spritz- oder Gießform eingelegt, in die erwärmter, aushärtbarer Kunststoff eingebracht wird, der beim Abkühlen und Aushärten die Basisanschlussvorrichtung ausbildet.

Aus der WO 2008/036894 A2 ist ein weiteres Wischblatt bekannt, bei dem eine Schmelzverbindung, die zwischen der Basisanschlussvorrichtung und der Kunststoffummantelung vorgesehen ist.

Nachteilig an diesem Stand der Technik ist, dass die Verbindung der metallischen Tragschiene mit der aus Kunststoff ausgebildeten Basisanschlussvorrichtung beim Auftreten vergleichsweise großer Scherkräfte in einer Richtung entlang der Tragschiene im Betrieb des Wischblatts sowie bei größeren Temperaturschwankungen problematisch ist.

### Offenbarung der Erfindung

Eine Aufgabe der Erfindung ist es daher, ein neues Wischblatt für einen Scheibenwischer bereit zu stellen, bei dem eine stabile und sichere Befestigung einer Basisanschlussvorrichtung an einer Tragschiene erreicht wird.

Dieses Problem wird gelöst durch ein Wischblatt für einen Scheibenwischer, mit einer Wischleiste, die mindestens eine Tragschiene aufweist, an die eine aus Kunststoff ausgebildete Basisanschlussvorrichtung angeformt ist, die an einer Adaptereinheit zur Anlenkung der Wischleiste an einem Wischerarm befestigt ist. Die mindestens eine Tragschiene weist ein mit einer Kunststoffummantelung versehenes Federelement auf. Zwischen der Basisanschlussvorrichtung und der Kunststoffummantelung ist zumindest abschnittsweise eine Schmelzverbindung ausgebildet. Die Schmelzverbindung ist durch ein Verschmelzen des Kunststoffs der Basisanschlussvorrichtung mit der Kunststoffummantelung der mindestens einen Tragschiene beim Anformen der Basisanschlussvorrichtung ausgebildet. Die Basisanschlussvorrichtung ist aus einem aushärtbaren Kunststoff ausgebildet, der durch Kunststoffspritzen an die mindestens eine Tragschiene angeformt ist. Der aushärtbare Kunststoff ist dazu ausgebildet, beim Kunststoffspritzen ein lokales Aufschmelzen der Kunststoffummantelung zum Herstellen der Schmelzverbindung zu ermöglichen.

Die Erfindung ermöglicht somit eine einfache und zuverlässige Befestigung der Basisanschlussvorrichtung an der Tragschiene des Wischblatts. Dabei kann durch eine Verschweißung der Basisanschlussvorrichtung an der Kunststoffummantelung der Tragschiene eine verbesserte Kraftübertragung von einem zugeordneten Wischerarm auf die Wischleiste bzw. eine dem Wischblatt zugeordnete Wischlippe bei einer vergleichsweise geringen Streuung von Abzugskräften erreicht werden. Hierbei kann auf einfache Art und Weise eine stabile Verschweißung der Basisanschlussvorrichtung an der Kunststoffummantelung der Tragschiene erreicht werden.

Die Basisanschlussvorrichtung weist bevorzugt einen Grundkörper auf, an dem laterale Halteglieder vorgesehen sind, die die mindestens eine Tragschiene zumindest abschnittsweise krallenartig umgreifen.

Somit kann eine sichere und zuverlässige Basisanschlussvorrichtung ausgebildet werden.

Die Adaptereinheit weist bevorzugt Kunststoff auf und ist zur Verbindung mit einem dem Wischerarm zugeordneten Anschlussglied ausgebildet.

Somit kann die Wischleiste auf einfache Art und Weise mit dem Wischerarm verbunden werden.

Gemäß einer Ausführungsform ist die Adaptereinheit an die Basisanschlussvorrichtung angeschweißt.

Die Erfindung ermöglicht somit eine stabile und zuverlässige Befestigung der Adaptereinheit an der Basisanschlussvorrichtung.

Die Adaptereinheit ist bevorzugt flächig an den Grundkörper der Basisanschlussvorrichtung angeschweißt.

Somit kann eine Verschweißung der Adaptereinheit an der Basisanschlussvorrichtung mit einer vergleichsweise großen Ausdehnung erreicht werden.

### Kurze Beschreibung der Zeichnungen

Die Erfindung ist anhand von in den Zeichnungen dargestellten Ausführungsbeispielen in der nachfolgenden Beschreibung näher erläutert. Es zeigen:
Fig. 1 eine Seitenansicht eines Wischblatts mit einer Wischleiste, an der eine Basisanschlussvorrichtung angeformt ist, gemäß einer Ausführungsform,
Fig. 2 eine perspektivische Ansicht eine Ausschnitts II des Wischblatts von Fig. 1, der die Tragschienen des Wischblatts von Fig. 1 nach einem Anformen der Basisanschlussvorrichtung von Fig. 1 illustriert,
Fig. 3 eine Schnittansicht einer der Tragschienen des Wischblatts von Fig. 1, die zum Anformen der Basisanschlussvorrichtung von Fig. 1 in ein zugeordnetes Spritz- oder Gießwerkzeug eingelegt wird,
Fig. 4 die Schnittansicht von Fig. 3 nach einer Fixierung des Spritz- oder Gießwerkzeugs an der Tragschiene,
Fig. 5 die Schnittansicht von Fig. 4 beim Ausbilden der Basisanschlussvorrichtung, und
Fig. 6 die Schnittansicht von Fig. 5 nach dem Ausbilden der Basisanschlussvorrichtung.

### Beschreibung der Ausführungsbeispiele

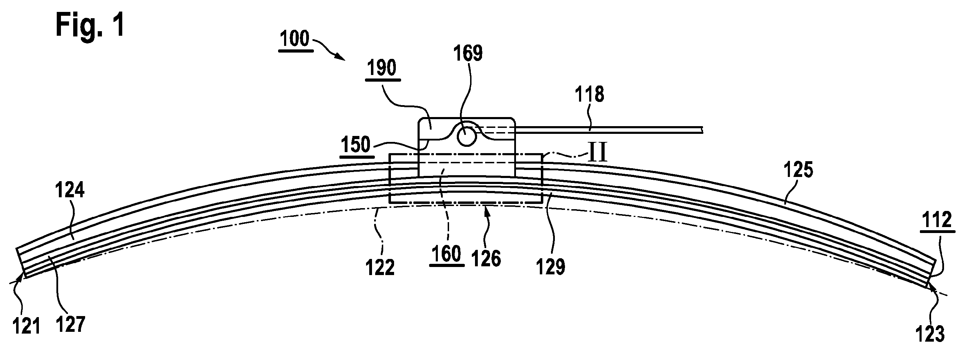

Fig. 1 zeigt ein Wischblatt 100 mit einer Wischleiste 112, die eine über einen Kippsteg 127 mit einer Rückenleiste 124 verbundene Wischlippe 129 aufweist. An der Rückenleiste 124 ist ein Spoiler 125 vorgesehen. An der Wischleiste 112 ist eine Basisanschlussvorrichtung 160 vorgesehen, an der eine Adaptereinheit 150 zum Anschließen eines einem Wischerarm 118 zugeordneten Anschlussglieds 190 befestigt ist. Das auch als Haltefeder bezeichnete Anschlussglied 190 ist in Fig. 1 beispielhaft über einen Gelenkbolzen 169 an der auch als Funktionsadapter bezeichneten Adaptereinheit 150 angeschlossen. Mit Hilfe des Wischerarms 118 kann das Wischblatt 100 zum Wischen über eine strichpunktiert dargestellte Scheibe 122, z.B. eine Kraftfahrzeugscheibe, geführt werden.

Es wird jedoch darauf hingewiesen, dass die Ausgestaltung des Wischblatts 100 mit Basisanschlussvorrichtung 160 und Adaptereinheit 150 zum Anschließen des Anschlussglieds 190 lediglich beispielhaften Charakter hat und nicht als Einschränkung der Erfindung zu verstehen ist. Vielmehr sind auch alternative Ausgestaltungen möglich, die ebenfalls im Rahmen der vorliegenden Erfindung liegen, z. B. können die Basisanschlussvorrichtung 160 und die Adaptereinheit 150 einstückig ausgebildet sein oder die Adaptereinheit 150 und das Anschlussglied 190 können einstückig ausgebildet sein. Darüber hinaus ist auch der Spoiler 125 optional, sodass die vorliegende Erfindung auch bei Wischblättern ohne Spoiler Anwendung finden kann.

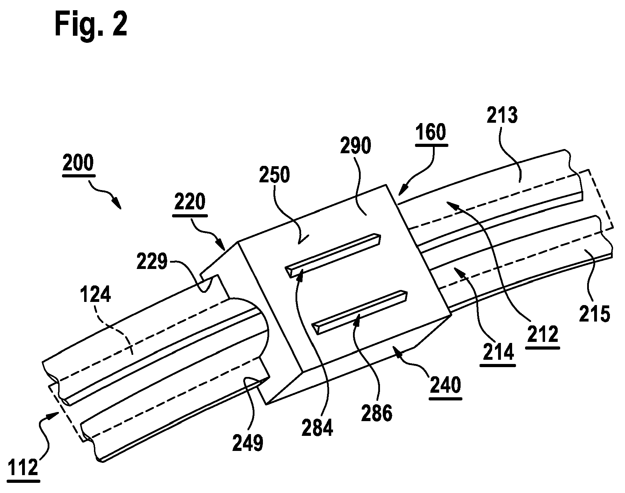

Gemäß einer Ausführungsform ist das Wischblatt 100 in Flachbalkenbauweise ausgebildet, d.h. die Wischleiste 112 weist seitliche Längsnuten auf, in denen zwei Tragschienen (212, 214 in Fig. 2), vorzugsweise Federschienen, angeordnet sind, wie beispielhaft unten bei Fig. 2 beschrieben. Hierbei können die Tragschienen (212, 214 in Fig. 2) an ihren axialen Enden z. B. über geeignete Endkappen miteinander verbunden sein. Alternativ hierzu kann die Wischleiste 112 als Hohlprofil mit einem etwa zentralen Längskanal ausgebildet sein, in dem eine einzelne Tragschiene angeordnet ist. Derartige Wischblätter und deren Ausgestaltungen sind dem Fachmann hinreichend bekannt, sodass hier zwecks Knappheit der Beschreibung auf eine eingehende Beschreibung verzichtet wird.

Die Wischleiste 112 mit der daran vorgesehenen Basisanschlussvorrichtung 160 ist bevorzugt gelenkfrei ausgebildet, wobei die Basisanschlussvorrichtung 160 vorzugsweise an der Wischleiste 112 vormontiert ist. Gemäß einer Ausführungsform ist die Basisanschlussvorrichtung 160 durch einen geeigneten Kunststoffspritz- oder-gießvorgang an die Tragschienen (212, 214 in Fig. 2) angeformt und die Adaptereinheit 150 ist an die Basisanschlussvorrichtung 160 angeschweißt, wie unten bei Fig. 2 bis 6 beschrieben. Hierzu weisen die Basisanschlussvorrichtung 160 und die Adaptereinheit 150 Kunststoff auf und sind bevorzugt als Kunststoffteile ausgebildet.

In Fig. 1 ist das Wischblatt 100 noch nicht vollständig auf die Scheibe 122 aufgesetzt, es liegen nur dessen axiale Wischblattenden 121, 123 an der Scheibe 122 an, während die Wischleiste 112 in Wischblattmitte 126, d.h. etwa im Bereich der Adaptereinheit 150, noch von der Scheibe 122 beabstandet ist. Wird über den Wischerarm 118 eine vorgesehene Anpresskraft auf das Anschlussglied 190 und somit die Adaptereinheit 150 ausgeübt, legt sich die Wischleiste 112 an der Scheibe 122 an, wobei ein gleichmäßiger Anpressdruck über die gesamte Wischblattlänge erreicht wird, auch wenn sich die Scheibenkrümmung im Verlauf der Wischbewegung ändert.

Fig. 2 zeigt illustrativ eine Anordnung 200 mit der Basisanschlussvorrichtung 160 von Fig. 1, die an beispielhafte, mit Kunststoffummantelungen 213, 215 versehene Tragschienen 212, 214 des Wischblatts 100 von Fig. 1 angeformt ist. Die Tragschienen 212, 214 sind beispielhaft in zugeordneten seitlichen Längsnuten der Wischleiste 112 von Fig. 1 angeordnet, die z. B. an deren Rückenleiste 124 ausgebildet sind. Die Rückenleiste 124 ist zwecks Klarheit und Übersichtlichkeit der Zeichnung in Fig. 2 nur schematisch angedeutet, während auf eine Darstellung der übrigen Wischleistenkomponenten zur Vereinfachung der Abbildung verzichtet wurde.

Gemäß einer Ausführungsform weist die Basisanschlussvorrichtung 160 einen Grundkörper 290 auf, an dem laterale Halteglieder 220, 240 vorgesehen sind. Das laterale Halteglied 220 erstreckt sich etwa L-förmig ausgehend von dem Grundkörper 290 und bildet mit diesem eine Nut 229 aus. Das laterale Halteglied 240 erstreckt sich relativ zum Halteglied 220 etwa horizontal gespiegelt L-förmig ausgehend von dem Grundkörper 290 und bildet mit diesem eine Nut 249 aus. Die Basisanschlussvorrichtung 160 ist illustrativ derart an der Wischleiste 112 angeordnet, dass die Halteglieder 220, 240 die Tragschienen 212 bzw. 214 zumindest abschnittsweise krallenartig umgreifen. Hierbei ist die Tragschiene 212 beispielhaft in der Nut 229 und die Tragschiene 214 ist in der Nut 249 der Basisanschlussvorrichtung 160 angeordnet.

An einer Oberseite 250 des Grundkörpers 290 sind zwei optionale, illustrativ längliche Energierichtungsgeber 284, 286 vorgesehen, die bei einem Verschweißen der Basisanschlussvorrichtung 160 mit der Adaptereinheit 150 von Fig. 1 Anwendung finden können, um eine definierte und kontrollierte Schmelzeerzeugung beim Verschweißen der Basisanschlussvorrichtung 160 mit der Adaptereinheit 150 zu ermöglichen. Somit kann z. B. durch Ultraschallschweißen eine flächige Schweißnaht zwischen der Basisanschlussvorrichtung 160 und der Adaptereinheit 150 ausgebildet werden, die bevorzugt etwa die Abmessungen der Oberseite 250 des Grundkörpers 290 aufweist.

Es wird jedoch darauf hingewiesen, dass die Beschreibung einer Schweißverbindung zwischen der Basisanschlussvorrichtung 160 und der Adaptereinheit 150 von Fig. 1 lediglich beispielhaften Charakter hat und nicht als Einschränkung der Erfindung zu verstehen ist. Vielmehr kann die Adaptereinheit 150 auf eine beliebige Art und Weise an der Basisanschlussvorrichtung 160 befestigt werden, z. B. durch Verrasten, Verkleben, Vernieten oder Verschrauben. In diesen Fällen ist es ebenfalls möglich, die Adaptereinheit 150 im wesentlichen Kunststofffrei, z. B. metallisch auszubilden.

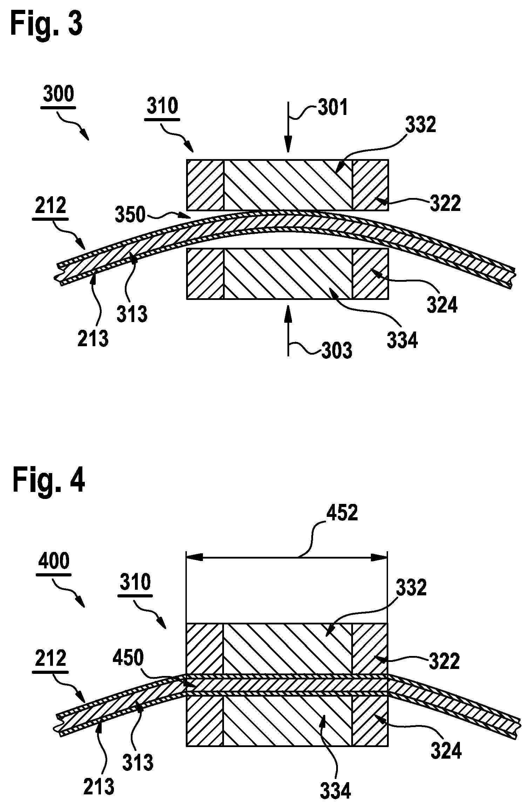

Fig. 3 bis 6 zeigen Schnittansichten zur Verdeutlichung eines Verfahrens zur Herstellung der Anordnung 200 von Fig. 2. Zur Vereinfachung der Darstellung ist in diesen Fig. 3 bis 6 lediglich ein axial im Wesentlichen zentraler Abschnitt der Tragschiene 212 von Fig. 2 gezeigt, während zwecks Klarheit und Übersichtlichkeit der Zeichnung auf eine Darstellung der übrigen Wischleistenkomponenten verzichtet wurde. Es wird jedoch darauf hingewiesen, dass das in den Fig. 3 bis 6 gezeigte und beschriebene analog für die Tragschiene 214 von Fig. 2 Gültigkeit hat.

Fig. 3 zeigt eine Anordnung 300 mit der Tragschiene 212 von Fig. 2 und einem illustrativ offenen Kunststoffspritz- oder -gießwerkzeug 310. Gemäß einer Ausführungsform weist die Tragschiene 212 ein mit der Kunststoffummantelung 213 versehenes Federelement 313 auf. Dieses ist z. B. eine aus Flach- oder Runddraht geformte Federschiene, die beispielsweise aus gehärtetem Stahl, Titan oder Aluminium ausgebildet ist. Alternativ kann das Federelement 313 aus Kunststoff ausgebildet sein.

Zum Anformen der Basisanschlussvorrichtung 160 von Fig. 1 an die Tragschiene 212 wird in einem ersten Arbeitsschritt ein vorgegebener, z. B. zentraler Bereich 350 der Tragschiene 212 in dem offenen Kunststoffspritz- oder -gießwerkzeug 310 angeordnet, das einen ersten, in Fig. 3 oberen Werkzeugabschnitt 322 und einen zweiten, in Fig. 3 unteren Werkzeugabschnitt 324 aufweist. Der obere Werkzeugabschnitt 322 steht beispielhaft in Wirkverbindung mit einem ersten, in Fig. 3 oberen Schieber oder überfederten Stift 332. Analog hierzu steht der untere Werkzeugabschnitt 324 beispielhaft in Wirkverbindung mit einem zweiten, in Fig. 3 unteren Schieber oder überfederten Stift 334. Zur Vereinfachung der Beschreibung wird nachfolgend lediglich auf die Schieber 332 bzw. 334 Bezug genommen. Dem Fachmann ist jedoch auch die Funktionalität geeigneter, überfederter Stifte hinreichend bekannt.

Es wird jedoch darauf hingewiesen, dass alternative Ausgestaltungen des Kunststoffspritz- oder -gießwerkzeugs 310 im Rahmen der vorliegenden Erfindung ebenfalls möglich sind. Beispielsweise kann das Werkzeug 310 ohne die Schieber 332, 334 ausgebildet sein, sodass eine entsprechende Formgebung der Basisanschlussvorrichtung 160 unmittelbar über den oberen und unteren Werkzeugabschnitt 322 bzw. 324 erfolgt. Alternativ hierzu kann ein einzelner Schieber vorgesehen sein, sodass die Formgebung zumindest teilweise über den oberen oder den unteren Werkzeugabschnitt 322 bzw. 324 erfolgt.

Gemäß einer Ausführungsform wird das Kunststoffspritz- oder -gießwerkzeug 310 in einem zweiten Arbeitsschritt geschlossen. Hierzu wird der obere Werkzeugabschnitt 322 mit dem oberen Schieber 332 in Richtung eines Pfeils 301 zur Tragschiene 212 hin verfahren und der untere Werkzeugabschnitt 324 mit dem unteren Schieber 334 wird in Richtung eines Pfeils 303 zur Tragschiene 212 hin verfahren, z. B. mittels zugeordneter Kernzüge. Alternativ hierzu kann auch lediglich einer der beiden Werkzeugabschnitte 322, 324 mit dem entsprechenden Schieber 332 bzw. 334 in Richtung des anderen Werkzeugabschnitts verfahren werden.

Fig. 4 zeigt eine Anordnung 400, die die Anordnung 300 von Fig. 3 mit geschlossenem Kunststoffspritz- oder -gießwerkzeug 310 illustriert. Wie aus Fig. 4 ersichtlich, wird die Tragschiene 212 durch Schließen des Kunststoffspritz- oder - gießwerkzeugs 310 gemäß einer Ausführungsform in einem vorgegebenen Bereich 450 mit einer Länge 452 in axialer Richtung der Tragschiene 212 abgeflacht bzw. gerade gebogen. Die Länge 452 entspricht hierbei etwa einer Längserstreckung des Kunststoffspritz- oder -gießwerkzeugs 310.

Es wird jedoch darauf hingewiesen, dass beim Schließen des Kunststoffspritz- oder -gießwerkzeugs 310 eine beliebige Formgebung für die Tragschiene 212 möglich ist, die z. B. auch eine teilweise oder gar keine Abflachung der Schiene 212 vorsehen kann. Diese Formgebung ermöglicht eine im Wesentlichen konstante Auflagekraftverteilung im Bereich der Basisanschlussvorrichtung 160 und kann durch das Kunststoffspritz- oder -gießwerkzeug 310 von Zyklus zu Zyklus exakt reproduziert werden

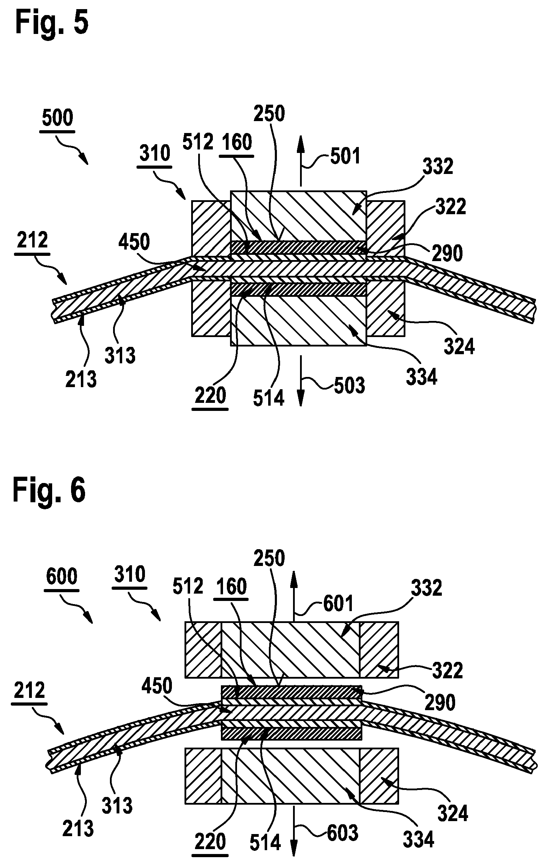

Fig. 5 zeigt eine Anordnung 500, die die Anordnung 400 von Fig. 4 bei der Ausführung eines dritten Arbeitsschritts illustriert, bei dem erwärmter, aushärtbarer Kunststoff in das Kunststoffspritz- oder -gießwerkzeug 310 eingebracht wird. Dieser aushärtbare Kunststoff kann gemäß einer Ausführungsform in das Kunststoffspritz- oder -gießwerkzeug 310 eingespritzt werden und hierbei die Schieber 332, 334 umspritzen, wobei die Tragschiene 212 bevorzugt vollständig in den eingespritzten Kunststoff eingebettet und die Basisanschlussvorrichtung 160 z. B. teilweise ausgebildet wird. Eine gewünschte Formgebung für die auszubildende Basisanschlussvorrichtung 160 wird hierbei beispielsweise von zugeordneten Basisflächen bzw. vorgegebenen Konturen der Schieber 332, 334 erzeugt. Daraufhin erfolgt beispielsweise ein Aushärten des eingespritzten Kunststoffs, sodass die bei Fig. 4 beschriebene Formgebung der Tragschiene 212 durch den ausgehärteten Kunststoff aufrecht erhalten wird. Somit ist anschließend ein Wegziehen der Schieber 332, 334 z. B. in Richtung von Pfeilen 501 bzw. 503 um eine vorgegebene Entfernung von der Tragschiene 212, beispielsweise ein Ausfahren über zugeordnete Kernzüge, möglich. Durch das Wegziehen der Schieber 332, 334 entstehen Hohlräume im Kunststoffspritz- oder - gießwerkzeug 310 bzw. in der ausgeformten Basisanschlussvorrichtung 160, die im selben oder einem nachfolgenden Arbeitsschritt mit weiterem aushärtbarem Kunststoff ausgespritzt bzw. ausgegossen werden können. Hierbei kann ebenfalls eine abschließende Formgebung bzw. Vervollständigung der Formgebung für die Basisanschlussvorrichtung 160 erfolgen.

Im dargestellten Ausführungsbeispiel dienen die Schieber 332, 334 illustrativ zur Ausbildung des Grundkörpers 290 der Basisanschlussvorrichtung 160 mit der Oberseite 250, sowie dem Halteglied 220 und dem Halteglied 240 von Fig. 2. Hierbei ermöglicht das Kunststoffspritz- oder -gießwerkzeug 310 das Aufrechterhalten eines vergleichsweise hohen Drucks auf den in das Werkzeug 310 eingebrachten Kunststoff, um somit ein Aushärten dieses Kunststoffs bei hohem Druck zu ermöglichen. Hierdurch kann das Aushärten des Kunststoffs verbessert werden, wobei die Federschiene 313 der Tragschiene 212 in der gemäß Fig. 4 vorgegebenen Form fixiert wird.

Gemäß einer Ausführungsform bewirkt der in das Kunststoffspritz- oder - gießwerkzeug 310 eingebrachte Kunststoff zumindest eine lokale Aufschmelzung des Kunststoffs der Kunststoffummantelung 213 der Tragschiene 212, z. B. im Bereich der Schieber 332, 334. Hierdurch kann sich der eingebrachte Kunststoff mit dem aufgeschmolzenen Kunststoff verbinden und somit eine Schmelzverbindung 512, 514 zwischen der Basisanschlussvorrichtung 160 und der Kunststoffummantelung 213 ausbilden. Da dies wie oben beschrieben bevorzugt unter hohem Druck erfolgt, wird hierdurch die Endfestigkeit des Kunststoffs bzw. der Verbindung vergrößert.

Fig. 6 zeigt eine Anordnung 600, die die Anordnung 500 von Fig. 5 bei der Ausführung eines vierten Arbeitsschritts illustriert, bei dem nach Erkalten und Aushärten des Kunststoffs der Basisanschlussvorrichtung 160 der obere Werkzeugabschnitt 322 mit dem oberen Schieber 332 in Richtung eines Pfeils 601 und der untere Werkzeugabschnitt 324 mit dem unteren Schieber 334 in Richtung eines Pfeils 603 von der Tragschiene 212 weg verfahren werden. Die Tragschiene 212 mit der daran angeformten Basisanschlussvorrichtung 160 wird dann in einem abschließenden Arbeitsschritt aus dem Kunststoffspritz- oder -gießwerkzeug 310 entnommen.

## Patentansprüche

1. Wischblatt (100) für einen Scheibenwischer, mit einer Wischleiste (112), die mindestens eine Tragschiene (212, 214) aufweist, an die eine aus Kunststoff ausgebildete Basisanschlussvorrichtung (160) angeformt ist, die an einer Adaptereinheit (150) zur Anlenkung der Wischleiste (112) an einem Wischerarm (118) befestigt ist, wobei die mindestens eine Tragschiene (212, 214) ein mit einer Kunststoffummantelung (213, 215) versehenes Federelement (313, 315) aufweist, wobei zwischen der Basisanschlussvorrichtung (160) und der Kunststoffummantelung (213, 215) zumindest abschnittsweise eine Schmelzverbindung (512, 514) ausgebildet ist, wobei die Schmelzverbindung (512, 514) durch ein Verschmelzen des Kunststoffs der Basisanschlussvorrichtung (160) mit der Kunststoffummantelung (213, 215) der mindestens eine Tragschiene (212, 214) beim Anformen der Basisanschlussvorrichtung (160) ausgebildet ist, **dadurch gekennzeichnet, dass** die Basisanschlussvorrichtung (160) aus einem aushärtbaren Kunststoff ausgebildet ist, der durch Kunststoffspritzen an die mindestens eine Tragschiene (212, 214) angeformt ist, wobei der aushärtbare Kunststoff dazu ausgebildet ist, beim Kunststoffspritzen ein lokales Aufschmelzen der Kunststoffummantelung (213, 215) zum Herstellen der Schmelzverbindung (512, 514) zu ermöglichen.

2. Wischblatt nach Anspruch 1, **dadurch gekennzeichnet, dass** die Basisanschlussvorrichtung (160) einen Grundkörper (290) aufweist, an dem laterale Halteglieder (220, 240) vorgesehen sind, die die mindestens eine Tragschiene (212, 214) zumindest abschnittsweise krallenartig umgreifen.

3. Wischblatt nach Anspruch 2, **dadurch gekennzeichnet, dass** die Adaptereinheit (150) Kunststoff aufweist und zur Verbindung mit einem dem Wischerarm (118) zugeordneten Anschlussglied (190) ausgebildet ist.

4. Wischblatt nach einem der vorhergehenden Ansprüche, **dadurch gekennzeichnet, dass** die Adaptereinheit (150) an die Basisanschlussvorrichtung (160) angeschweißt ist.

5. Wischblatt nach Anspruch 3 oder 4, **dadurch gekennzeichnet, dass** die Adaptereinheit (150) flächig an den Grundkörper (290) der Basisanschlussvorrichtung (160) angeschweißt ist.

## Claims

1. Wiper blade (100) for a windshield wiper, having a wiper strip (112) which has at least one support rail (212, 214), onto which a basic connecting device (160), which is constructed from plastic, is integrally molded, and which is attached to an adapter unit (150) for coupling the wiper strip (112) to a wiper arm (118), wherein the at least one support rail (212, 214) has a spring element (313, 315) which is provided with a plastic sheath (213, 215), wherein a fused connection (512, 514) is constructed, at least in certain sections, between the basic connecting device (160) and the plastic sheath (213, 215), wherein the fused connection (512, 514) is constructed by fusing the plastic of the basic connecting device (160) to the plastic sheath (213, 215) of the at least one support rail (212, 214) when the basic connecting device (160) is integrally molded on, **characterized in that** the basic connecting device (160) is constructed from a curable plastic which is integrally molded onto the at least one support rail (212, 214) by plastic injection molding, wherein the curable plastic is designed to permit local fusing on of the plastic sheath (213, 215) during the plastic injection molding, in order to bring about the fused connection (512, 514).

2. Wiper blade according to Claim 1, **characterized in that** the basic connecting device (160) has a base body (290) on which the lateral securing elements (220, 240) are provided, which securing elements (220, 240) engage, at least in certain sections, around the at least one support rail (212, 214) in a claw-like manner.

3. Wiper blade according to Claim 2, **characterized in that** the adapter unit (150) has plastic and is designed to connect to a connecting element (190) which is assigned to the wiper arm (118).

4. Wiper blade according to one of the preceding claims, **characterized in that** the adapter unit (150) is welded onto the basic connecting device (160).

5. Wiper blade according to claim 3 or 4, **characterized in that** the adapter unit (150) is welded onto the base body (290) of the basic connecting device (160) over a surface.

## Revendications

1. Balai d'essuie-glace (100) pour un essuie-glace, comprenant une raclette de balai d'essuie-glace (112) qui présente au moins un rail de support (212, 214), sur lequel est façonné un dispositif de raccordement de base (160) réalisé en plastique, qui est fixé à une unité d'adaptateur (150) pour l'articulation de la raclette de balai d'essuie-glace (112) à un bras d'essuie-glace (118), l'au moins un rail de support (212, 214) présentant un élément de ressort (313, 315) pourvu d'une enveloppe en plastique (213, 215), une connexion fusible (512, 514) étant réalisée au moins en partie entre le dispositif de raccordement de base (160) et l'enveloppe en plastique (2 13, 215), la connexion fusible (512, 514) étant réalisée par une fusion du plastique du dispositif de raccordement de base (160) à l'enveloppe en plastique (213, 215) de l'au moins un rail de support (212, 214) lors de la formation du dispositif de raccordement de base (160), **caractérisé en ce que**
le dispositif de raccordement de base (160) est réalisé en un plastique durcissable qui est formé par des injections de plastique au niveau de l'au moins un rail de support (212, 214), le plastique durcissable étant réalisé de manière à permettre au niveau des injections de plastique une fusion locale de l'enveloppe en plastique (213, 215) pour fabriquer la connexion fusible (512, 514).

2. Balai d'essuie-glace selon la revendication 1, **caractérisé en ce que** le dispositif de raccordement de base (160) présente un corps de base (290) au niveau duquel sont prévus des organes de retenue latéraux (220, 240) qui viennent en prise au moins en partie en forme de griffe autour de l'au moins un rail de support (212, 214).

3. Balai d'essuie-glace selon la revendication 2, **caractérisé en ce que** l'unité d'adaptateur (150) présente du plastique et est réalisée en vue de la connexion à un organe de raccordement (190) associé au bras d'essuie-glace (118).

4. Balai d'essuie-glace selon l'une quelconque des revendications précédentes, **caractérisé en ce que** l'unité d'adaptateur (150) est soudée au dispositif de raccordement de base (160).

5. Balai d'essuie-glace selon la revendication 3 ou 4, **caractérisé en ce que** l'unité d'adaptateur (150) est soudée à plat au corps de base (290) du dispositif de raccordement de base (160).
